# EUROPEAN PATENT APPLICATION

(11) **EP 2 214 280 A1**
(43) Date of publication of application: **04.08.2010**
(21) Application number: 10152216.7
(22) Date of filing: 01.02.2010
(51) Int. Cl.: H02H 7/20, H02H 7/22

(54) **A driving circuit for a DC load**

(30) Priority: 03.02.2009 IT TO20090064
(71) Applicant: ELBI International S.p.A., 10129 Torino (IT)
(72) Inventor: Bianconi, Enrico, I-10040, RIVALTA DI TORINO (Torino) (IT)
(74) Representative: Quinterno, Giuseppe

(57) **Abstract**

The driving circuit (1) comprises:
a pair of supply terminals (A, B) for connection to an AC supply voltage source;
a rectifier circuit (2), whose input side is coupled to the supply terminals (A, B) through a first, series-connected capacitor (C1), and whose output side is coupled to the load (L, W) through a second, parallel-connected capacitor (C2); and
a control switch (TR), connected in parallel with the load (L, W).

The arrangement is such that when the control switch (TR) is conducting and nonconducting, respectively, the load (L, W) is de-activated and activated respectively.

## Description

The present invention relates to a driving circuit for a DC load, in particular for the excitation winding of a control relay of a compressor of a refrigerating apparatus.

The object of the present invention is to provide a driving circuit which automatically switches to a safe condition in case of a fault. In the context of driving a control relay for activating a compressor of a refrigerating apparatus, this safe condition is the condition in which said relay remains excited, and therefore the compressor remains active, thus preventing the deterioration of the provisions contained in the refrigerating apparatus.

This and other objects are achieved according to the invention with a driving circuit comprising:
a pair of supply terminals for connection to an AC supply voltage source, such as the electrical mains supply;
a rectifier circuit, whose input side is coupled to the supply terminals through a first, series-connected capacitor, and whose output side is coupled to the load through a second, parallel-connected capacitor; and
a control switch, connected in parallel with the load;
the arrangement being such that when the control switch is conducting and non-conducting, respectively, the load is de-activated and activated respectively.

Further characteristics and advantages of the invention will be apparent from the following detailed description, provided purely by way of non-limiting example, with reference to the appended drawing which shows an electrical circuit of an embodiment of a driving circuit according to the invention.

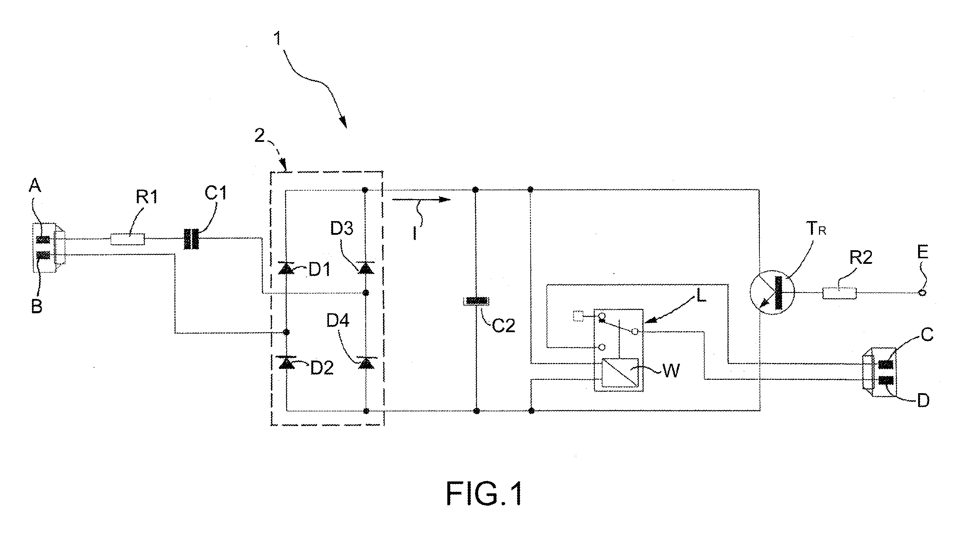

In Figure 1, a driving circuit according to the invention is indicated as a whole by 1.

This circuit has a pair of supply terminals A and B for connection to an AC supply voltage source, such as the electrical mains supply at 50(60) Hz.

The driving circuit 1 also comprises a rectifier circuit indicated as a whole by 2 in Figure 1. In the illustrated example, this rectifier circuit is of the full-wave type and comprises four diodes D1-D4 connected in a bridge configuration. However, the rectifier device could simply be of the half-wave type.

The input side of the rectifier circuit 2 is coupled to the supply terminals A and B through a resistor R1 and a capacitor C1 connected in series.

The output side of the rectifier circuit 2 is connected to the load, indicated as a whole by L, through a second capacitor C2 connected in parallel.

In the illustrated embodiment, the load L is a relay, and in particular the excitation winding W of the relay. This relay is, for example, the control relay for activating a compressor of a refrigerating apparatus to which it is connected through a pair of output terminals C and D.

In operation, the voltage across the load L is low and practically negligible, and therefore it can be assumed that the current I supplied at the output of the rectifier circuit 2 is essentially constant.

Finally, the driving circuit 1 comprises a control switch TR, parallel-connected to the load L. In the illustrated example, this switch is a transistor, in particular an npn bipolar transistor, having its collector-emitter path connected in parallel with the load, and therefore in parallel with the output side of the rectifier circuit 2.

The base of the transistor TR is connected through a resistor R2 to an input terminal E for a logical control signal which is received, for example, from a microprocessor.

The arrangement is such that, when the signal at the input E is at the "1" level, the transistor TR is conducting and short-circuits the load L, which is then de-activated. Consequently, the compressor (or other apparatus) controlled by the load L is also de-activated.

When the signal E is at the "0" level, the transistor TR is non-conducting, and the load L is activated by the current supplied by the rectifier circuit 2.

In case of a fault, the driving circuit 1 keeps the load L permanently active, with the aforementioned advantages.

Naturally, the principle of the invention remaining the same, the forms of embodiment and the details of construction may be varied widely with respect to those described and illustrated, which have been given purely by way of non-limiting example, without thereby departing from the scope of the invention as defined by the attached claims.

## Claims

1. Driving circuit (1) for a DC load (L), in particular for the winding (W) of a control relay (L) of a compressor of a refrigerating apparatus,
comprising
a pair of supply terminals (A, B) for connection to an AC supply voltage source;
a rectifier circuit (2), whose input side is coupled to the supply terminals (A, B) through a first, series-connected capacitor (C1), and whose output side is coupled to the load (L, W) through a second, parallel-connected capacitor (C2); and
a control switch (TR), connected in parallel with the load (L, W);
the arrangement being such that when the control switch (TR) is conducting and non-conducting, respectively, the load (L, W) is de-activated and activated respectively.

2. Driving circuit according to Claim 1, wherein the rectifier circuit (2) is of the full-wave type.

3. Driving circuit according to any one of the preceding claims, wherein the control switch comprises a transistor (TR).
